# FASCICULE DE BREVET EUROPEEN

(11) **EP 0 602 219 B1**
(45) Date de publication et mention de la délivrance du brevet: **18.09.1996**
(21) Numéro de dépôt: 93914798.9
(22) Date de dépôt: 02.07.1993
(51) Int. Cl.: F16K 5/12

(54) **ROBINET A TOURNANT SPHERIQUE OU CYLINDRIQUE EQUIPE D'UN INSERT**
KUGELHAHN ODER ZYLINDERHAHN MIT EINSATZSTÜCK
STEEL BALL VALVE OR PARALLEL PLUG VALVE PROVIDED WITH AN INSERT

(30) Priorité: 03.07.1992 FR 9208412
(43) Date de publication de la demande: 22.06.1994
(73) Titulaire: ROTATROL AG, 6330 Cham (CH)
(72) Inventeur: BEY, Roger, 68110 Illzach (FR)
(74) Mandataire: Nithardt, Roland
(86) Numéro de dépôt international: FR9300673
(87) Numéro de publication internationale: WO9401703

(56) Documents cités:
- WO-A-88/05880
- FR-A- 2 506 420
- US-A- 5 070 909

## Description

La présente invention concerne une vanne du type à bille ou à boisseau comportant un corps définissant un logement pour un élément mobile constitué par une bille ou un boisseau, cet élément mobile étant pourvu d'un passage sensiblement cylindrique agencé pour être amené dans le prolongement d'un conduit d'entrée et d'un conduit de sortie lorsque la vanne est ouverte, et dans une direction sensiblement perpendiculaire à l'axe des conduits d'entrée et de sortie lorsque la vanne est fermée.

Actuellement, les vannes à bille, également nommées vannes à sphère, du type connu subissent de fortes contraintes dues aux pressions différentielles existant au moment de l'ouverture ou à la fin de la fermeture de la vanne. En raison de ces pressions différentielles, l'énergie potentielle se transforme en énergie cinétique qui génère une augmentation de la vitesse de passage du fluide à faible ouverture, source essentielle d'érosion et de turbulences. Ces pressions différentielles sont également la source de vibrations à l'intérieur de la vanne, qui en augmentent le niveau sonore et la fatigue mécanique. Dès que le logement est endommagé, l'étanchéité de ladite vanne n'est plus assurée.

La vanne à boisseau décrite dans la demande de brevet français FR-A-2 506 420 tente de proposer une solution aux problèmes exposés ci-dessus. A cet effet, le boisseau comporte deux atténuateurs de turbulence disposés dans les zones de turbulences qui se forment au moment de l'ouverture et de la fermeture de la vanne. Ces atténuateurs de turbulence sont constitués par des parois étagées et perforées. En pratique, cette solution ne donne pas pleinement satisfaction pour les raisons suivantes :
- Les atténuateurs sont disposés dans la zone d'étanchéité de la sphère, de sorte que la détente ainsi que la conversion d'énergie affecte la tenue des sièges.
- La fermeture de la sphère ne peut se faire à un angle de 0°, mais à un angle négatif, ce qui est proscrit pour le réglage des servomoteurs de commande.
- La détente de la pression obtenue par cette vanne est insuffisante du fait de la taille des atténuateurs.
- De plus, l'industrie des vannes standard ne peut exploiter cette invention car elle implique un sur-dimensionnement coûteux et encombrant de la sphère.

La présente invention propose de pallier les inconvénients mentionnés ci-dessus en fournissant une vanne à bille ou à boisseau permettant de diviser la pression différentielle en plusieurs étages au moment de son ouverture et de sa fermeture. Cette pression étant divisée, sa détente se fait graduellement et évite ainsi la récupération de pression et de ce fait l'augmentation de vitesse.

Ce but est atteint par une vanne telle que définie en préambule, caractérisée en ce qu'elle comporte un insert tubulaire sensiblement cylindrique logé dans ledit passage et définissant au moins une chambre d'entrée et au moins une chambre de sortie, ces chambres étant diamétralement opposées et formées par deux évidements longitudinaux ménagés dans l'épaisseur de la paroi de l'insert parallèlement à l'axe longitudinal du passage, et en ce que ces chambres communiquent entre elles par au moins deux canaux à chicanes ménagés à la périphérie de l'insert respectivement sur deux secteurs cylindriques limités par lesdites chambres.

Lesdits canaux à chicanes sont, de préférence, constitués par plusieurs rainures longitudinales reliées entre elles, soit par des orifices transversaux ménagés à travers des nervures séparant ces rainures, soit par des gorges transversales ménagées à la périphérie desdits secteurs cylindriques.

Selon une forme préférée de réalisation, la chambre d'entrée est ouverte du côté de l'entrée de l'insert et obturée ou partiellement obturée du côté de la sortie dudit insert, et la chambre de sortie est obturée ou partiellement obturée du côté de l'entrée de l'insert et ouverte du côté de la sortie dudit insert.

Dans la forme de réalisation préférée, l'évidement est ouvert et chaque chambre est délimitée vers l'extérieur par un secteur de la paroi interne du passage ménagé à travers la bille ou le boisseau et un épaulement d'extrémité. Cet évidement ouvert peut être délimité par un méplat longitudinal ou une surface cylindrique, ménagé à la périphérie de l'insert.

Selon une variante de réalisation, l'évidement est fermé vers l'extérieur et la chambre est constituée par une cavité borgne ménagée dans l'épaisseur de la paroi de l'insert.

L'épaulement d'extrémité peut comporter avantageusement des conduits ménagés axialement à travers cet épaulement et agencés pour évacuer les impuretés éventuellement accumulées, quand la vanne est en position d'ouverture.

Dans la forme de réalisation préférée, l'insert possède un passage central sensiblement cylindrique, le diamètre de ce passage pouvant être inférieur ou égal au diamètre des conduits d'entrée et de sortie.

La présente invention et ses avantages apparaîtront mieux dans la description suivante d'un exemple de réalisation, en référence aux dessins annexés, dans lesquels :
- la figure 1 est une vue schématique d'une vanne à bille selon l'invention,
- la figure 2 est une vue schématique d'une vanne à boisseau selon l'invention,
- la figure 3 est une vue en coupe longitudinale d'une première forme de réalisation d'une vanne à bille selon l'invention en position d'ouverture,
- la figure 4 est une vue en coupe longitudinale d'une seconde forme de réalisation d'une vanne à bille selon l'invention en position d'ouverture,
- la figure 5 est une vue en perspective d'une forme de réalisation préférée de l'insert équipant la vanne selon l'invention,
- la figure 6 est une vue partiellement coupée d'une vanne à bille selon l'invention, illustrant le cheminement du fluide,
- les figures 7 et 8 représentent des vues schématiques en perspective d'autres formes de réalisation de l'insert, et
- la figure 9 est une vue en plan d'une bille équipant une vanne selon l'invention, illustrant le cheminement du fluide.

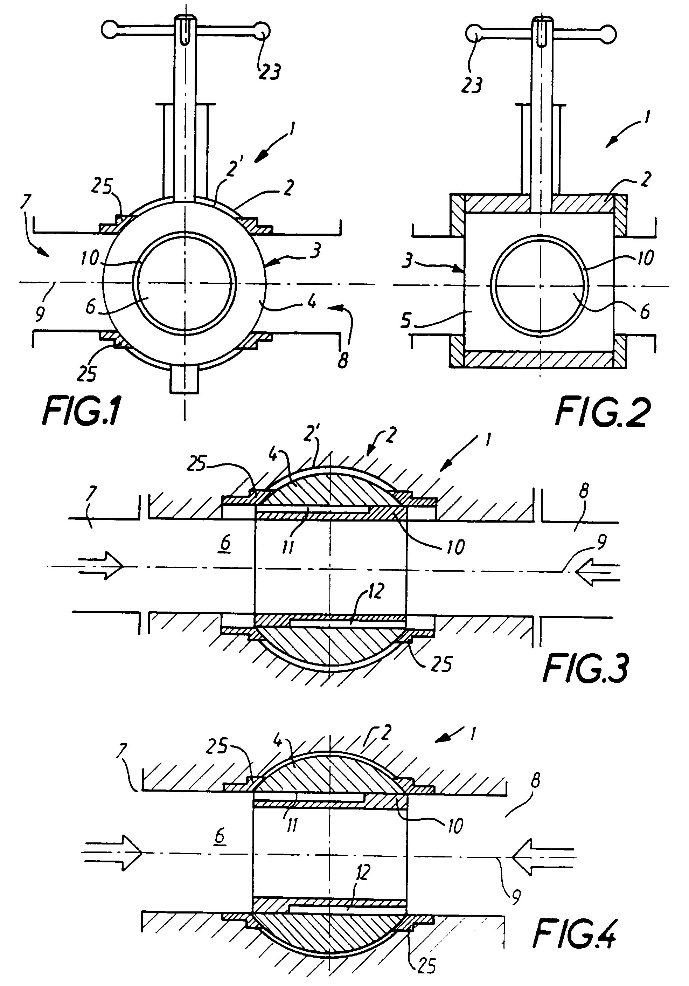

En référence aux figures, la vanne 1 comporte un corps 2 définissant un logement 2' pour un élément mobile 3 constitué par une bille 4 ou un boisseau 5. Ce logement 2' est pourvu de deux sièges 25 assurant l'étanchéité avec l'élément mobile 3. Cet élément mobile 3 est pourvu d'un passage 6 sensiblement cylindrique agencé pour être amené dans le prolongement d'un conduit d'entrée 7 et d'un conduit de sortie 8 lorsque la vanne est ouverte, et dans une direction sensiblement perpendiculaire à l'axe 9 des conduits d'entrée et de sortie lorsque la vanne est fermée. L'ouverture et la fermeture de la vanne représentée par les figures 1 et 2, sont par exemple commandées par un volant de commande manuelle 23 qui peut être remplacé par un système mécanique commandé électriquement ou par un vérin hydraulique ou pneumatique, selon l'utilisation de cette vanne ou l'installation dans laquelle elle est montée.

La vanne 1 comporte un insert tubulaire 10 sensiblement cylindrique engagé à force ou fixé par des moyens appropriés dans ledit passage 6. Cet insert définit avec la paroi interne du passage 6 au moins une chambre d'entrée 11 et au moins une chambre de sortie 12 qui sont diamétralement opposées et formées par deux évidements 13 longitudinaux ménagés dans l'épaisseur de la paroi de l'insert 10 parallèlement à l'axe longitudinal 14 du passage 6. Ces chambres 11 et 12 communiquent entre elles par au moins deux canaux à chicanes 15 ménagés à la périphérie de l'insert 10 respectivement sur deux secteurs cylindriques limités par lesdites chambres 11 et 12.

Ces canaux à chicanes ont pour but de créer une perte de charge relativement importante sur le fluide en circulation et peuvent de ce fait être réalisés selon diverses constructions.

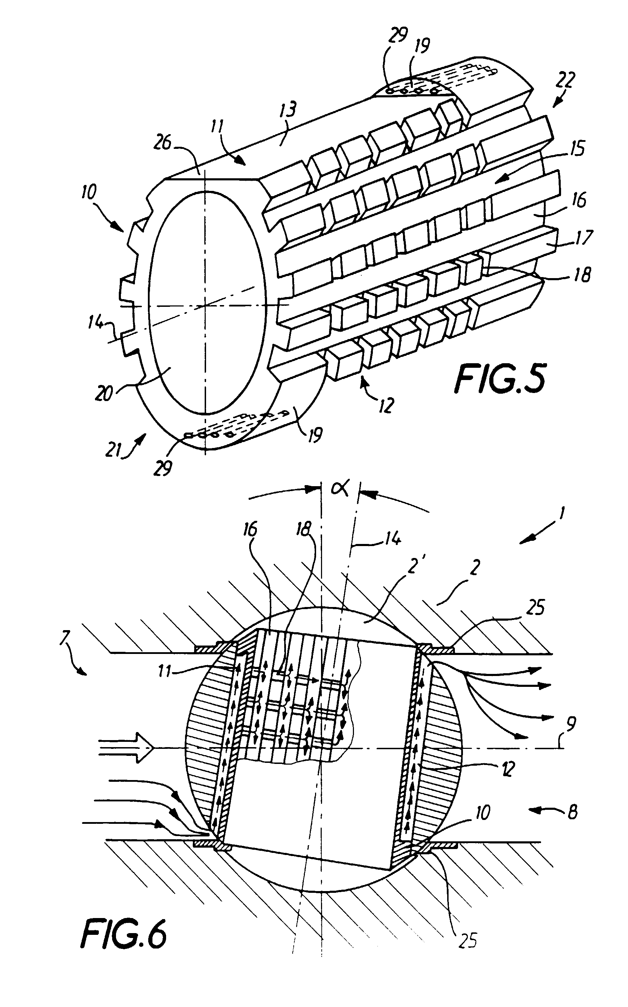

La figure 5 montre une réalisation où lesdits canaux à chicanes 15 sont constitués par plusieurs rainures 16 longitudinales reliées entre elles par des gorges transversales 18 ménagées dans les nervures 17 définies à la périphérie desdits secteurs cylindriques par les rainures 16. Selon une autre forme de réalisation, les gorges transversales 18 peuvent être remplacées par des orifices transversaux ménagés à travers ces nervures 17. Toutefois cette réalisation (non représentée) présente des difficultés d'usinage.

La chambre d'entrée 11 est ouverte du côté de l'entrée 21 de l'insert 10 et partiellement obturée du côté de sa sortie 22. La chambre de sortie 12 est partiellement obturée du côté de l'entrée 21 de l'insert 10 et ouverte du côté de sa sortie 22. Ces chambres peuvent être définies de différentes façons selon la forme de réalisation de l'insert 10.

Dans le cas de la figure 5, les deux évidements longitudinaux 13 sont ouverts et délimités par un méplat longitudinal 26 usiné à la périphérie de l'insert 10. Chaque chambre 11, 12 est alors délimitée vers l'extérieur par un secteur de la paroi interne du passage 6 ménagé à travers la bille 4 ou le boisseau 5 et un épaulement d'extrémité 19 obturant partiellement la chambre du côté opposé à son ouverture. Cet épaulement d'extrémité 19 comporte des conduits 29 axiaux permettant un auto-nettoyage de la vanne lorsqu'elle se trouve en position d'ouverture et que le fluide est chargé d'impuretés. Cette réalisation n'est pas obligatoire si le fluide utilisé est pur.

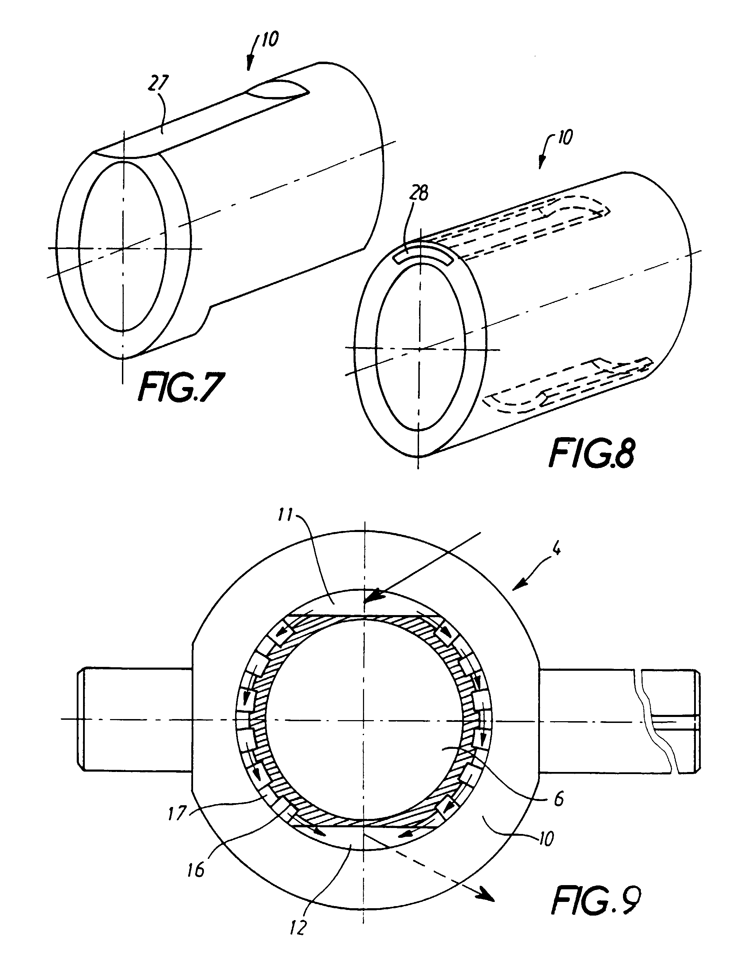

Dans la forme de réalisation illustrée par la figure 7, les chambres 11, 12 sont délimitées vers l'intérieur par une surface cylindrique 27 coaxiale à l'axe de l'insert. Dans l'exemple représenté, cette surface cylindrique est concave mais pourrait bien entendu être convexe.

Dans la forme de réalisation illustrée par la figure 8, l'évidement 13 est fermé vers l'extérieur et chaque chambre 11, 12 est alors constituée par une cavité borgne 28 ménagée dans l'épaisseur de la paroi de l'insert 10. Cette forme d'insert permet une réalisation en deux pièces complémentaires qui sont ensuite assemblées.

Dans toutes les formes de réalisation décrites, l'insert possède un passage central 20 sensiblement cylindrique. Le diamètre de ce passage peut être inférieur au diamètre des conduits d'entrée 7 et de sortie 8, comme le montre la figure 4 ou égal à ce diamètre comme représenté par la figure 3.

Quand la vanne 1 est en position fermée, l'axe 14 du passage 6 est perpendiculaire à l'axe 9 des conduits d'entrée 7 et de sortie 8. L'élément mobile 3 de la vanne, constitué par la bille 4 ou le boisseau 5, est en contact avec les sièges 25 prévus dans le logement 2' du corps 2, assurant ainsi l'étanchéité de la vanne. Pour ouvrir la vanne 1, l'utilisateur manoeuvre le volant de commande 23. L'élément mobile 3 tourne dans son logement 2'. A partir d'un angle de rotation, illustré par la figure 6, qui est un angle aigu dont la valeur dépend du diamètre du passage 6, le fluide circulant dans le conduit d'entrée peut pénétrer dans la chambre d'entrée 11. Sous l'effet de la pression d'entrée, ce fluide est forcé jusqu'à la chambre de sortie 12, à travers les canaux à chicanes 15 qui créent un cheminement radial extrêmement perturbé, induisant une forte perte de charge. Cette perte de charge a pour effet de réduire la pression différentielle entre l'entrée et la sortie de la vanne, et ainsi de diminuer considérablement les vitesses locales sur les sièges de la vanne et par conséquent l'érosion et le bruit de cette vanne. Lorsque la vanne est complètement ouverte, l'insert 10 ne crée plus aucun obstacle au passage du fluide, et la vanne est auto-nettoyante.

Ce phénomène se répète lors de la fermeture de la vanne.

L'insert 10 tel que décrit ci-dessus peut équiper toutes sortes de vannes à bille ou à boisseau destinées à être montées sur des conduits d'alimentation de fluide d'un diamètre constant ou réduit. La conception symétrique de cet insert 10 permet également l'utilisation d'un fluide en mouvement bi-directionnel et sa présence, qui a pour rôle de faire chuter la pression instantanée du fluide dans une certaine phase d'ouverture de la vanne, rend possible l'utilisation des vannes à bille sur des circuits à forte pression de fluide. En effet, les vannes à bille classiques étaient en général utilisées sur des circuits à faibles pressions différentielles pour les raisons exposées en préambule.

La présente invention n'est pas limitée à l'exemple décrit ci-dessus mais s'étend à toute modification ou variante évidente pour l'homme de l'art.

## Revendications

1. Vanne du type à bille ou à boisseau comportant un corps (2) définissant un logement (2') pour un élément mobile (3) constitué par une bille (4) ou un boisseau (5), cet élément mobile étant pourvu d'un passage (6) sensiblement cylindrique agencé pour être amené dans le prolongement d'un conduit d'entrée (7) et d'un conduit de sortie (8) lorsque la vanne est ouverte, et dans une direction sensiblement perpendiculaire à l'axe (9) des conduits d'entrée et de sortie lorsque la vanne est fermée, caractérisée en ce qu'elle comporte un insert tubulaire (10) sensiblement cylindrique logé dans ledit passage (6) et définissant au moins une chambre d'entrée (11) et au moins une chambre de sortie (12), ces chambres étant diamétralement opposées et formées par deux évidements longitudinaux (13) ménagés dans l'épaisseur de la paroi de l'insert (10) parallèlement à l'axe longitudinal (14) du passage (6), et en ce que ces chambres communiquent entre elles par au moins deux canaux à chicanes (15) ménagés à la périphérie de l'insert (10) respectivement sur deux secteurs cylindriques limités par lesdites chambres latérales (11, 12).

2. Vanne selon la revendication 1, caractérisée en ce que lesdits canaux à chicanes (15) sont constitués par plusieurs rainures longitudinales (16) reliées entre elles par des alésages transversaux ménagés à travers des nervures (17) séparant ces rainures.

3. Vanne selon la revendication 1, caractérisée en ce que lesdits canaux à chicanes (15) sont constitués par plusieurs rainures longitudinales (16) reliées entre elles par des gorges transversales (18) ménagées à la périphérie desdits secteurs cylindriques.

4. Vanne selon la revendication 1, caractérisée en ce que la chambre d'entrée (11) est ouverte du côté de l'entrée (21) de l'insert (10) et obturée du côté de la sortie (22) dudit insert, et en ce que la chambre de sortie (12) est obturée du côté de l'entrée (21) de l'insert (10) et ouverte du côté de la sortie (22) dudit insert.

5. Vanne selon la revendication 1, caractérisée en ce que la chambre d'entrée (11) est ouverte du côté de l'entrée (21) de l'insert (10) et partiellement obturée du côté de la sortie (22) dudit insert, et en ce que la chambre de sortie (12) est partiellement obturée du côté de l'entrée (21) de l'insert (10) et ouverte du côté de la sortie (22) dudit insert.

6. Vanne selon la revendication 1, caractérisée en ce que l'évidement (13) est ouvert et en ce que chaque chambre (11, 12) est délimitée vers l'extérieur par un secteur de la paroi interne du passage (6) ménagé à travers la bille (4) ou le boisseau (5) et un épaulement d'extrémité (19).

7. Vanne selon la revendication 6, caractérisée en ce que l'évidement (13) ouvert est délimité par un méplat longitudinal ménagé à la périphérie de l'insert (10).

8. Vanne selon la revendication 6, caractérisée en ce que l'évidement ouvert est délimité par une surface cylindrique ménagée à la périphérie de l'insert.

9. Vanne selon la revendication 6, caractérisée en ce que l'évidement (13) est fermé vers l'extérieur et en ce que la chambre est constituée par une cavité borgne ménagée dans l'épaisseur de la paroi de l'insert.

10. Vanne selon la revendication 6, caractérisée en ce que l'épaulement d'extrémité (19) comporte des conduits (29) ménagés axialement à travers cet épaulement et agencés pour évacuer les impuretés éventuellement accumulées, quand la vanne est en position d'ouverture.

11. Vanne selon la revendication 1, caractérisée en ce que l'insert (10) possède un passage central (20) sensiblement cylindrique, le diamètre de ce passage étant inférieur au diamètre des conduits d'entrée (7) et de sortie (8).

12. Vanne selon la revendication 1, caractérisée en ce que l'insert (10) possède un passage central (20) sensiblement cylindrique, le diamètre de ce passage étant égal au diamètre des conduits d'entrée (7) et de sortie (8).

## Patentansprüche

1. Hahn des Typs mit Kugel oder mit Zylinder, der aus einem Körper (2) besteht, der einen Freiraum (2') für ein bewegliches Element (3) enthält, wobei dieses bewegliche Element, das eine Kugel (4) oder ein Zylinder (5) sein kann, mit einem merklich zylindrischen Durchgang (6) ausgestattet ist, der angeordnet ist, um in die Verlängerung eines Eingangskanals (7) und eines Ausgangskanals (8) gebracht zu werden, wenn der Hahn offen ist, und in eine merklich rechtwinklige Richtung zu der Achse (9) der Eingangs- und Ausgangskanäle gebracht zu werden wenn der Hahn geschlossen ist, gekennzeichnet dadurch, daß es einen in dem Durchgang (6) angeordneten rohrförmigen zylindrischen Einsatz (10) besitzt, der mindestens eine Eingangskammer (11) und mindestens eine Ausgangskammer (12) festlegt, wobei diese Kammern diametral entgegengesetzt liegen und aus zwei Längsaussparungen (13) bestehen, die in der Wand des Einsatzes (10) parallel zur Längsachse (14) des Durchganges (6) angebracht sind, und dadurch, daß diese Kammern miteinander in Verbindung stehen dank mindestens zwei Schikanen-Kanäle (15), welche auf der Peripherie des Einsatzes (10), jeweils auf zwei durch die besagten lateralen Kammern (11, 12) begrenzte zylindrischen Sektoren angeordnet sind.

2. Hahn gemäß Anspruch 1, gekennzeichnet dadurch, daß die besagten Schikanen-Kanäle (15) aus mehreren Längsrillen (16) bestehen, die untereinander durch Querbohrungen verbunden sind, die in den die Rillen trennenden Rippen (17) angeordnet sind.

3. Hahn gemäß Anspruch 1, gekennzeichnet dadurch, daß die besagten Schikanen-Kanäle (15) aus mehreren Längsrillen (16) bestehen, die untereinander durch Querrillen (18) verbunden sind, die in der Peripherie der besagten zylindrischen Sektoren angeordnet sind.

4. Hahn gemäß Anspruch 1, gekennzeichnet dadurch, daß die Eingangskammer (11) auf der Eingangs-Seite (21) des Einsatzes (10) offen ist und auf der Ausgangs-Seite (22) des besagten Einsatzes geschloßen ist, und dadurch, daß die Ausgangskammer (12) auf der Eingangs-Seite (21) des Einsatzes (10) geschloßen ist und auf der Ausgangs-Seite (22) des besagten Einsatzes offen ist.

5. Hahn gemäß Anspruch 1, gekennzeichnet dadurch, daß die Eingangskammer (11) auf der Eingangs-Seite (21) des Einsatzes (10) offen ist und auf der Ausgangs-Seite (22) des besagten Einsatzes zum Teil geschloßen ist, und dadurch, daß die Ausgangskammer (12) auf der Eingangs-Seite (21) des Einsatzes (10) zum Teil geschloßen ist und auf der Ausgangs-Seite (22) des besagten Einsatzes offen ist.

6. Hahn gemäß Anspruch 1, gekennzeichnet dadurch, daß die Aussparung (13) offen ist, und dadurch, daß jede Kammer (11, 12) auf seiner außenseite durch einen Sektor der Innenwand des in der Kugel (4) oder in dem Zylinder (5) angeordneten Durchganges (6) sowie durch ein End-Absatz (19) begrenzt ist.

7. Hahn gemäß Anspruch 6, gekennzeichnet dadurch, daß die offene Aussparung (13) durch eine in der Peripherie des Einsatzes (10) angeordnete Längs-Abflachung begrenzt ist.

8. Hahn gemäß Anspruch 6, gekennzeichnet dadurch, daß die offene Aussparung durch eine in der Peripherie des Einsatzes angeordnete zylindriche Fläche begrenzt ist.

9. Hahn gemäß Anspruch 6, gekennzeichnet dadurch, daß die Aussparung (13) auf seiner Außenseite geschloßen ist, und dadurch, daß die Kammer aus einer in der Wand des Einsatzes angeordneten nicht durchgehenden Aushölung besteht.

10. Hahn gemäß Anspruch 6, gekennzeichnet dadurch, daß der End-Absatz (19) Kanäle (29) besitzt, die axial in dem End-Absatz angebracht sind, und die angeordnet sind, um möglicherweise angesammelte Unreinheiten abzuführen wenn der Hahn in seiner offenen-Position steht.

11. Hahn gemäß Anspruch 1, gekennzeichnet dadurch, daß der Einsatz (10) einen zylindrischen zentralen Durchgang (20) besitzt, dessen Durchmesser kleiner ist als der der Eingangs- (7) und Ausgangs-(8) Kanäle

12. Hahn gemäß Anspruch 1, gekennzeichnet dadurch, daß der Einsatz (10) einen zylindrischen zentralen Durchgang (20) besitzt, dessen Durchmesser gleich ist mit dem der Eingangs- (7) und Ausgangs-(8) Kanäle.

## Claims

1. Ball valve or plug valve comprising a body (2) defining a housing (2') for a movable member (3) consisting of a ball (4) or a plug (5), this movable member having a substantially cylindrical flow passage arranged to be brought into the continuation of an inlet (7) and an outlet (8) when the valve is open, and in a direction which is substantially perpendicular to the axis (9) of the inlet and outlet when the valve is closed, characterized in that it comprises a substantially cylindrical tubular insert member (10) in said passage (6) defining at least one inlet chamber portion (11) and at least one outlet chamber portion (12), these chamber portions being diametrically opposed and consisting of two longitudinal recesses (13) formed in the wall of the insert member (10) parallel to the longitudinal axis (14) of the passage (6), and in that these chamber portions communicate via two or more resistors (15) formed at the periphery of the insert member (10) in two cylindrical sectors defined by said lateral chamber portions (11, 12)

2. Valve of claim 1, characterized in that said resistors (15) are comprised of several longitudinal grooves (16) connected by transversal bores running through ribs (17) separating these grooves.

3. Valve of claim 1, characterized in that said resistors (15) are comprised of several longitudinal grooves (16) connected by transversal slots (18) formed at the periphery of said cylindrical sectors.

4. Valve of claim 1, characterized in that the inlet chamber portion (11) is open on the insert member's (10) inlet side (21) and closed on said insert member's outlet side (22), and the outlet chamber portion (12) is closed on the insert member's (10) inlet side (21) and open on said insert member's outlet side (22).

5. Valve of claim 1, characterized in that the inlet chamber portion (11) is open on the insert member's (10) inlet side (21) and partially closed on said insert member's outlet side (22), and the outlet chamber portion (12) is partially closed on the insert member's (10) inlet side (21) and open on said insert member's outlet side (22).

6. Valve of claim 1, characterized in that the recess (13) is open and each chamber portion (11, 12) is defined outwardly by a sector of the passage's (6) internal wall formed through the ball (4) or the plug (5) and an end collar (19).

7. Valve of claim 6, characterized in that the open recess (13) is defined by a longitudinal flat part formed at the periphery of the insert member (10).

8. Valve of claim 6, characterized in that the open recess is defined by a cylindrical surface at the periphery of the insert member.

9. Valve of claim 6, characterized in that the recess (13) is closed outwardly and in that the chamber portion is comprised of a blind cavity in the wall of the insert member.

10. Valve of claim 6, characterized in that the end collar (19) comprises conduits (29) running axially through this collar and designed to evacuate any impureties which may have collected, when the valve is in the open position.

11. Valve of claim 1, characterized in that the insert member (10) has a substantially cylindrical middle passage (20), the diameter of this passage being smaller than the diameter ofthe inlet (7) and outlet (8).

12. Valve of claim 1, characterized in that the insert member (10) has a substantially cylindrical middle passage (20), the diameter of this passage being equal to the diameter of the inlet (7) and outlet (8).
